Europäisches Patentamt

European Patent Office

Office européen des brevets

(19)

(11) Veröffentlichungsnummer: **0 128 398**
**B1**

(12) **EUROPÄISCHE PATENTSCHRIFT**

(45) Veröffentlichungstag der Patentschrift:
**07.12.88**

(21) Anmeldenummer: **84105710.2**

(22) Anmeldetag: **18.05.84**

(51) Int. Cl.⁴: **F 02 B 37/00, F 16 J 3/02**

(54) **Verdrängerlader zum Laden von Verbrennungsmotoren.**

(30) Priorität: **18.05.83 DE 3318136**

(43) Veröffentlichungstag der Anmeldung:
**19.12.84 Patentblatt 84/51**

(45) Bekanntmachung des Hinweises auf die Patenterteilung:
**07.12.88 Patentblatt 88/49**

(84) Benannte Vertragsstaaten:
**DE FR GB IT SE**

(56) Entgegenhaltungen:
**DE-A- 2 139 932**
**DE-C- 570 407**
**DE-C- 838 397**
**FR-A- 990 698**
**FR-A- 1 586 140**
**GB-A- 414 711**
**GB-A- 638 923**
**US-A- 1 489 349**

(73) Patentinhaber: **Schatz, Oskar, Dr.-Ing.,**
**Waldpromenade 16, D-8035 Gauting (DE)**

(72) Erfinder: **Schatz, Oskar, Dr.-Ing., Waldpromenade 16,**
**D-8035 Gauting (DE)**

(74) Vertreter: **Lamprecht, Helmut, Dipl.-Ing.,**
**Corneliusstrasse 42, D-8000 München 5 (DE)**

ACTORUM AG

## Beschreibung

Die Erfindung betrifft einen Verdrängerlader zur Verdichtung von Gasen, insbesondere zum Laden von Verbrennungsmotoren, mit einer mit einem Lufteinlass und einem Luftauslass versehenen Ladeluftkammer, deren Wandung zur Veränderung ihres Volumens fest mit einer beweglichen Membran verbunden ist, wobei die Membran tellerförmig gestaltet und in axialer Richtung beweglich ist.

Aus der GB-A-638 923 ist ein Zweitaktverbrennungsmotor bekannt, bei welchem durch die Abgase des Verbrennungsmotors ein Kolbenverdichter betätigt werden kann, der als Spülgebläse oder für andere Zwecke eingesetzt werden kann. Es ist vorgesehen, dass der Kolben des Verdichters durch eine Membran ersetzt werden kann. Einzelheiten einer mit Membran ausgestatteten Konstruktion sind nicht erläutert. Eine solche Konstruktion ist aus der DE-A-21 39 932 bekannt.

Beim Einsatz in Ladern von Verbrennungsmotoren müssen die Membranen so beschaffen sein, dass sie trotz der dreidimensionalen Verformung der Membran den hohen Lebensdauererwartungen entsprechen, d. h., sie müssen eine genügend grosse Flexibilität aufweisen. Sofern die Membranen bei durch Abgas angetriebenen Ladern mit den heissen Motorabgasen in Berührung kommen, müssen sie ausserdem ausreichend hitzebeständig sein.

Der Erfindung liegt die Aufgabe zugrunde, einen Verdrängerlader der eingangs erwähnten Art so auszugestalten, dass er trotz Verwendung von Membranen den im Betrieb auftretenden Beanspruchungen gewachsen ist und insbesondere durch Vermeidung von Spannungen in den Membranen eine ausreichende Lebensdauer erwarten lässt.

Die Lösung dieser Aufgabe besteht darin, dass die Membranfläche aus dicht aneinanderliegenden aus einem hitzebeständigen Material, relativ zueinander beweglichen Lamellen zusammengefügt ist, die gelenkig an einer inneren und einer äusseren Einspannung befestigt sind, und dass die innere Einspannung relativ zur äusseren Einspannung um eine zur Lamellenfläche etwa normale Achse drehbeweglich angeordnet ist.

Durch diese Ausbildung werden Stauchungen oder Dehnungen der Lamellen während der Bewegung der Membran vermieden, weil sich die Entfernung zwischen den Anschlusspunkten einer Lamelle an der inneren und der äusseren Einspannung verändern kann, ohne eine Spannung auf die Lamelle zu übertragen.

Vorzugsweise sind dabei die innere und die äussere Einspannung durch eine Feder in Richtung einer Zugbelastung der Lamelle gegeneinander vorgespannt.

Membranen aus mehreren Einzelelementen sind beispielsweise aus der GB-A-414 711 bekannt, jedoch handelt es sich dort nicht um einzelne zur Bildung der Membranfläche aneinandergefügte Lamellen, sondern um mehrere dünnwandige, die gesamte Membranfläche ausfüllende Membranelemente, welche in Richtung der Membranbewegung einander überdeckend angeordnet sind. Dabei werden während der Membranbewegung alle einzelnen Membranelemente aus der Membranbewegung resultierenden Spannungen unterworfen.

Aus der DE-C-570 407 ist eine Membran bekannt, welche für einen grossen Federweg bestimmt ist und aus einem hochelastischen Material, wie z.B. Gummi, besteht. Damit diese hohe Elastizität aufweisende Membran zugleich auch eine hohe Widerstandsfähigkeit erhält, ist die Membran aus hochelastischem Material auf einer bzw. mehreren versetzt übereinander gelagerten Rosettenfedern abgestützt. Die Rosettenfeder ist ausgehend vom äusseren Umfang mit nach innen gerichteten, federelastischen Zungen versehen, deren inneres Ende frei beweglich ist. Für einen Einsatz in Verbindung mit heissen Motorabgasen ist diese Konstruktion nicht geeignet.

Anhand der nun folgenden Beschreibung eines in der Zeichnung dargestellten Ausführungsbeispiels der Erfindung wird diese näher erläutert.

Es zeigt:

Fig. 1 einen schematischen Schnitt durch einen Verdrängerlader mit einer Tellermembran und

Fig. 2 eine Membran mit gegeneinander verdrehbarer innerer und äusserer Einspannung.

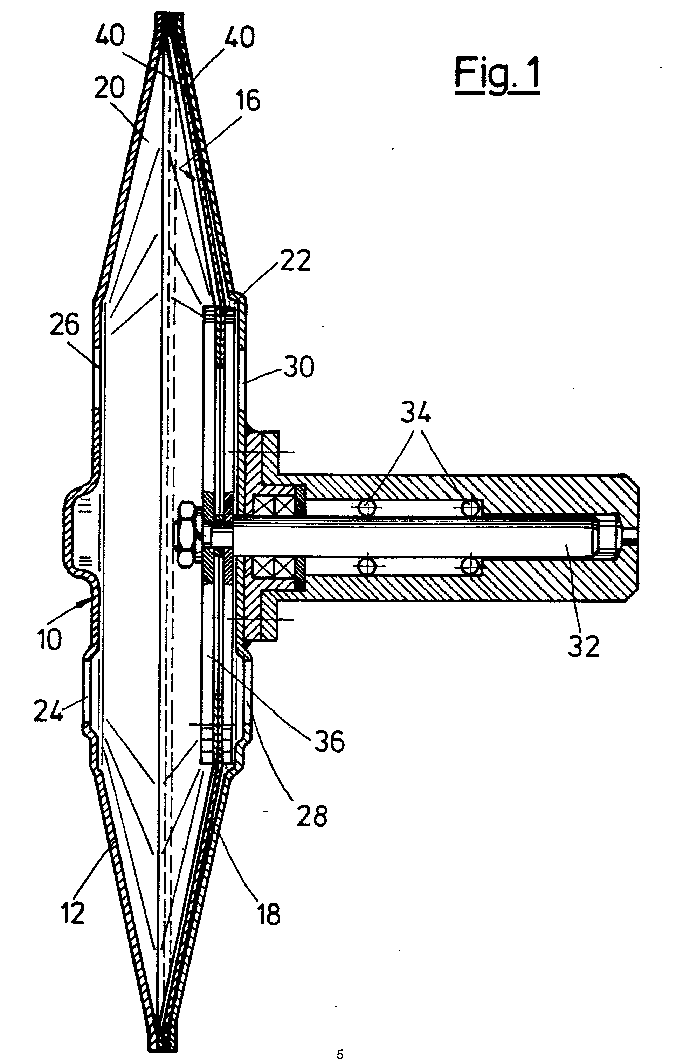

In Fig. 1 ist schematisch ein durch Abgas betätigbarer Verdrängerlader 10 dargestellt, dessen Wandung 12 eine Laderkammer 14 umschliesst, die durch eine bewegliche Trennwand in Form einer Membran 16 in eine Abgaskammer 20 und eine Ladeluftkammer 22 unterteilt ist. Die Abgaskammer 20 weist einen Abgaseinlass 24 und einen Abgasauslass 26, die Ladeluftkammer eine Lufteinlassöffnung 28 und eine Luftauslassöffnung 30 auf.

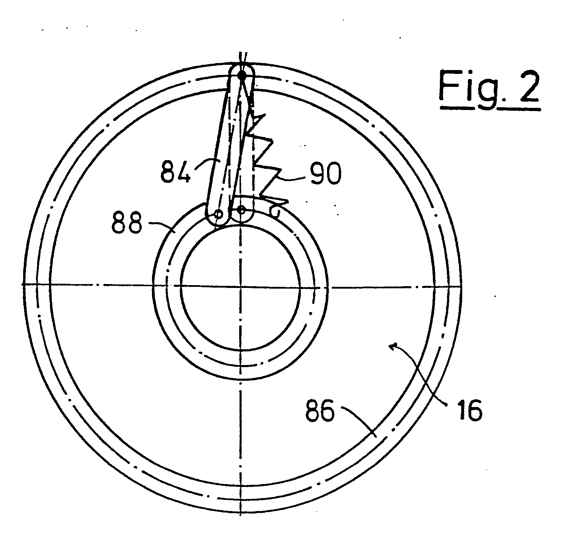

In die Laderkammer 14 ragt eine Führungsstange 32, die ausserhalb der Laderkammer 14 in einer Führung 34 axial beweglich geführt ist. An ihrem in der Laderkammer 14 befindlichen tellerförmigen Ende 36 ist das Zentrum der Membran 16 befestigt, deren Rand an der Wandung 12 befestigt ist. Die Membran 16 ist in Fig. 2 näher dargestellt.

Die Fig. 2 zeigt die Ausgestaltung der Membran 16, deren Membranfläche durch Lamellen 84 gebildet wird. Beim Wechsel von der einen zur anderen Endstellung findet eine gewisse Stauchung der Membran in radialer Richtung statt. Um diese Stauchung ohne besondere Materialspannungen bewältigen zu können, ist eine äussere und eine innere, jeweils ringförmige Einspannung für die Lamellen 84 vorgesehen. Die äussere Einspannung ist mit 86, die innere Einspannung mit 88 bezeichnet. Die Lamellen 84 sind jeweils um zur Hubrichtung der Membran 16 parallele Achsen verschwenkbar an der äusseren Einspannung 86 und an der inneren Einspannung 88 befestigt. Tritt bei der Hubbewegung der Membran 16 eine Druckbeanspruchung in Längsrichtung der Lamellen 84 auf, so führt dies zu einer Relativbewegung zwischen äusserer und innerer Einspannung 86 bzw. 88, wobei die Lamellen 84 stärker aus der radialen Richtung abweichen. Bei einer Zubeanspruchung tritt der gegenteilige Effekt ein, die Relativbewegung zwischen der äusseren Einspannung 86 und der inneren Einspannung 88 findet in Gegenrichtung statt und die Lamellen 84 werden sich der radialen Richtung annähern. Vorzugsweise wird man die äussere Einspannung 86 und die innere Einspannung 88 durch eine Feder 90 derart gegeneinander vorspannen, dass die Lamellen 84 auf Zug beansprucht werden.

Der mit der Membran ausgestattete Verdrängerlader 10 kann sowohl durch Abgas als auch mechanisch betätigt werden.

**Patentansprüche**

1. Verdrängerlader zur Verdichtung von Gasen, insbesondere zum Laden von Verbrennungsmotoren mit einer mit einem Lufteinlass (28) und einem Luftauslass (26) versehenen Ladeluftkammer (22), deren Wandung (12) zur Veränderung ihres Volumens fest mit einer beweglichen Membran (16) verbunden ist, wobei die Membran (16) tellerförmig gestaltet und in axialer Richtung beweglich ist, dadurch gekennzeichnet, dass die Membranfläche aus dicht aneinanderliegenden aus einem hitzebeständigen Material, relativ zueinander beweglichen Lamellen (84) zusammengefügt ist, die gelenkig an einer inneren (88) und einer äusseren (86) Einspannung befestigt sind, und dass die innere Einspannung (88) relativ zur äusseren Einspannung (86) um eine zur Lamellenfläche etwa normale Achse drehbeweglich angeordnet ist.

2. Verdrängerlader nach Anspruch 1, dadurch gekennzeichnet, dass die innere (88) und die äussere (86) Einspannung durch eine Feder (90) in Richtung einer Zugbeanspruchung der Lamellen (84) gegeneinander vorgespannt sind.

**Claims**

1. A displacement charger for the compression of gases and more especially for the charging of combustion engines, comprising a combustion air chamber (22) having an air inlet port (28) and an air outlet port (26), the wall (12) of the chamber being fixedly connected with a movable membrane (16) for changing the volume thereof, said membrane (16) being in the form of a dish and being able to move in the axial direction, characterized in that the membrane surface is made up of joined lamellae (84) placed close to each other and movable relatively to each other and consisting of a refractory material, such lammellae being articulated with an inner (88) and an outer (86) holding means and in that the inner holding means (88) is arranged so as to be able to turn in relation to the outer holding means (86) about an axis generally normal to the face of the lamellae.

2. The displacement charger as claimed in claim 1 characterized in that the inner (88) and the outer (86) holding means are biased by a spring (90) in relation to each other so as to tend to tensionally load the lamellae (84).

**Revendications**

1. Compresseur a déplacement positif pour la compression de gaz, en particulier pour l'alimentation de moteurs à combustion interne, avec une chambre d'alimentation (22) prévue avec une admission d'air (28) et avec un échappement d'air (26), dont la paroi (12) est reliée, envue de la modification du volume, d'une façon fixe avec une membrane mobile (16), cette membrane (16) étant en forme de disque et étant mobile dans le sens axial, caractérisé en ce que la surface de la membrane est obtenue par un ensemble de lamelles (84) jointives et étanches, mobiles les unes par rapport aux autres et constituées d'un materiau résistant à la chaleur et qui sont fixées articulées sur un tendeur interne (88) et un tendeur externe (86), et en ce que le tendeur interne (88) est, relativement au tendeur externe (86), disposé à rotation autour d'un axe sensiblement perpendiculaire à la surface des lamelles.

2. Compresseur volumétrique suivant la revendication 1, caractérisé en ce que le tendeur interne (88) et le tendeur externe (86) sont prétendus l'un par rapport à l'autre, au moyen d'un ressort (90), dans le sens d'une sollicitation en traction des lamelles (84).

Fig. 1

Fig. 2